# EUROPEAN PATENT SPECIFICATION

(11) **EP 3 937 027 B1**
(45) Date of publication and mention of the grant of the patent: **01.11.2023**
(21) Application number: 21174227.5
(22) Date of filing: 18.05.2021
(51) Int. Cl.: G06F 16/25

(54) **METHOD AND APPARATUS FOR PROCESSING LABEL DATA, DEVICE, AND STORAGE MEDIUM**
VERFAHREN UND EINRICHTUNG ZUR VERARBEITUNG VON ETIKETTENDATEN, VORRICHTUNG UND SPEICHERMEDIUM
PROCÉDÉ ET APPAREIL DE TRAITEMENT DE DONNÉES D'ÉTIQUETTES, DISPOSITIF ET SUPPORT D'ENREGISTREMENT

(30) Priority: 27.09.2020 CN 202011037355
(43) Date of publication of application: 12.01.2022
(73) Proprietor: BEIJING BAIDU NETCOM SCIENCE AND TECHNOLOGY CO., LTD., Beijing 100085 (CN)
(72) Inventor: QUAN, Weilong, Beijing, 100085 (CN); WANG, Dong, Beijing, 100085 (CN); ZHAO, Yuyang, Beijing, 100085 (CN)
(74) Representative: Maiwald GmbH

(56) References cited:
- WO-A1-2020/086284
- US-A1- 2008 065 701
- US-A1- 2013 205 020

## Description

### TECHNICAL FIELD

The present disclosure relates to a field of data processing technology and further to big data processing technology and more particularly, to a method for processing label data, an apparatus for processing label data, a device and a storage medium.

### BACKGROUND

With continuous development of user profile and feature engineering, user label data has richer dimensions and application scenarios. For example, the business side may determine target audiences based on the user profile and behavior features so as to reach users in the target audiences, which may effectively improve an operating efficiency of the business side and enhance the adhesiveness of users.

The business side may have label data of trillion bits level every day, such that how to process (such as store or query) label data becomes an important problem in the industry.

US2008/065701A1 discloses a method for tracking changes to user content in an obline social network. Content maintained in an online social network or other online communities is tracked for changes and updates. The content may include user profiles, digital photos, digital audio and video files, testimonials, and identification of users who are friends. When such change or update occurs, users of the online social network or online community are notified according to various criteria that they have set. The notification may be provided by e-mail, an RSS feed, or a web page when accessed. With this feature, users can browse through content of other users with efficiency.

### SUMMARY

The present disclosure provides a method and an apparatus for processing label data, a device and a storage medium.

The invention is set out in the appended set of claims. The object of the invention is solved by the features of the independent claims. Further embodiments are the subject-matter of the dependent claims.

The technical solution according to the embodiment of the present disclosure may reduce storage space of the label data.

It is to be understood that the above summary of the present disclosure is not intended to describe the key or important features of embodiments of the present disclosure, and shall not be construed to limit the scope of the present disclosure. Additional features of embodiments of present disclosure will be given in part in the following descriptions, become apparent in part from the following descriptions.

### BRIEF DESCRIPTION OF THE DRAWINGS

The drawings are used to generally understand the present disclosure and shall not be construed to limit the present disclosure.
FIG. 1a is a flowchart of a method for processing label data according to an embodiment of the present disclosure.
FIG. 1b is a schematic diagram of bitmap data according to an embodiment of the present disclosure.
FIG. 2 is a flowchart of a method for processing label data according to another embodiment of the present disclosure.
FIG. 3a is a flowchart of a method for processing label data according to another embodiment of the present disclosure.
FIG. 3b is a schematic diagram of a global dictionary operation according to an embodiment of the present disclosure.
FIG. 3c is a schematic diagram of processing label data according to an embodiment of the present disclosure.
FIG. 4a is a flowchart of a method for processing label data according to another embodiment of the present disclosure.
FIG. 4b is a schematic diagram of a materialized view according to an embodiment of the present disclosure.
FIG. 5 is a block diagram of an apparatus for processing label data according to an embodiment of the present disclosure.
FIG. 6 is a block diagram of an electronic device for implementing a method for processing label data according to an embodiment of the present disclosure.

### DETAILED DESCRIPTION

Reference will now be made in detail to exemplary embodiments, which are illustrated in the accompanying drawings. The implementations set forth in the following description of exemplary embodiments do not represent all implementations consistent with the disclosure. It would be appreciated by those skilled in the art that the above embodiments cannot be construed to limit the present disclosure, and changes, alternatives, and modifications can be made in the embodiments without departing from principles and scope of the present disclosure. Also, for clarity and conciseness, some well-known functions and structures are omitted in the following descriptions.

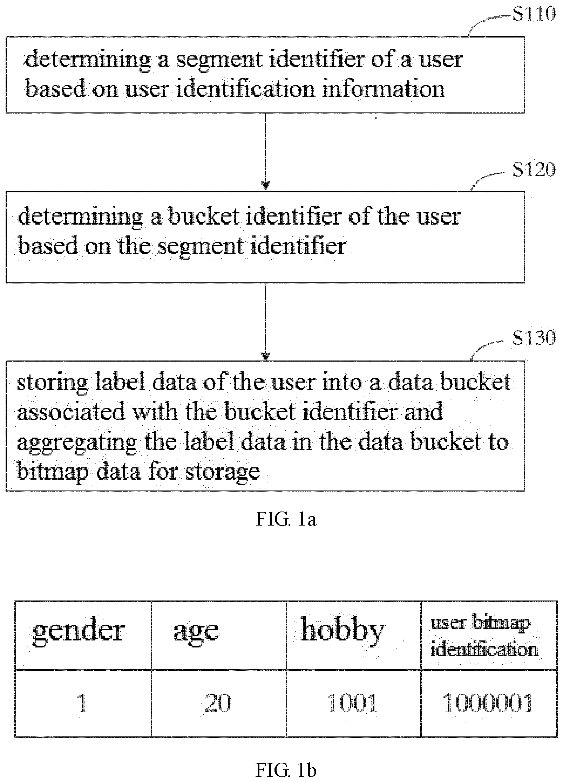

FIG. 1a is a flowchart of a method for processing label data according to an embodiment of the present disclosure. The embodiment may be applicable to a situation of processing (such as storing, querying) mass user label data. The method may be performed by an electronic device, or particularly by an apparatus for processing label data. The apparatus may be implemented in software and/or hardware, and may be integrated in the electronic device. As illustrated in FIG. 1a, the method may include the following.

At block S 110, a segment identifier of a user is determined based on user identification information.

At block S 120, a bucket identifier of the user is determined based on the segment identifier.

At block S130, label data of the user is stored in a data bucket associated with the bucket identifier and the label data in the data bucket is aggregated to bitmap data for storage.

The user refers to a user who would like to store label data into a database. The user may be a new user of the database, i.e., the database does not store any label data of the user previously. In detail, existing user identifiers in the database may be recorded and a matching is performed on the existing user identifiers and a user identifier of the user, if the matching fails, the user is determined as a new user. The user identifier may be a character string. Different forms of user identifiers are used for different user schemes, which are not limited herein.

The segment identifier of the user refers to an identifier of a segment to which the user belongs, which may be an integer. The segment of the user may include at least one other user in addition to the user. In other words, one segment at least includes two users. The database includes at least two data buckets. Each bucket has a unique bucket identifier, i.e., the bucket identifier is a unique identification of the data bucket, which may be an integer. In detail, the bucket identifier of the user is obtained by using the segment identifier mod the total number of the data buckets in the database. For example, the segment identifier is 4 and the total number is 3, then the bucket identifier is 1.

The data bucket (also called as current data bucket) associated with the bucket identifier stores both the label data of the user and label data of other users in the segment of the user. By determining the bucket identifier of the user based on the segment identifier of the user, different users having the same segment identifier can be classified into the same data bucket. Compared to a method of determining the data bucket of the users with different user identifiers based on user identification information, the present method may improve a degree of aggregation (i.e., density) of the label data in the data bucket, such that the storage space may be reduced and the data querying efficiency can be improved.

In the embodiment of the present disclosure, the bitmap data may include at least one label dimension and a user bitmap identification dimension. The label may be a user profile label, a behavior feature label and the like, for example gender, age, hobby. The label dimension in each piece of bitmap data has a unique value, i.e., different bitmap data has different values for the label dimension. A user bitmap identification in each piece of bitmap data is configured to characterize information of the user having the value of the label dimension.

In detail, the label data of the user in the data bucket is aggregated to the bitmap data as follows. The label data with the same value for the label dimension is aggregated. The user bitmap identification is constructed based on aggregated user identification information. During construction of the user bitmap identification, Hash calculation is performed on the user identification information to obtain a mapped integer N, i.e., the N^{th} position in the user bitmap identification is set to 1, which means that each bit in the user bitmap identification is assigned to a value of 0 or 1 to indicate whether a user exists at this position. FIG. b is a schematic diagram of bitmap data according to an embodiment of the present disclosure. As illustrated in FIG. 1b, the user bitmap identification in the piece of bitmap data is 1000001, which means that there are two users having the gender represented by 1, the age of 20 and the hobby represented by 1001, and the user identification information of the two users after Hash mapping is 1 and 7, respectively.

By aggregating the label data of the user in the data bucket to the bitmap data, the label data having the same value for the label dimension is aggregated to one piece of bitmap data, which may further improve the degree of aggregation of the label data, such that the storage space required for the label data may be further reduced.

According to the embodiment of the present disclosure, by determining the bucket identifier of the user based on the segment identifier of the user, different users having the same segment identifier are classified into the same data bucket, which may improve the degree of aggregation (i.e., density) of the label data in the data bucket, such that the storage space of the label data may be reduced and the data querying efficiency of the label data can be improved. Further, by aggregating the label data of the user in the data bucket to the bitmap data, the label data having the same value for the label dimension is aggregated to one piece of bitmap data, which may further improve the degree of aggregation of the label data, such that the storage space required for the label data may be further reduced and the data querying efficiency of the label data can be further improved.

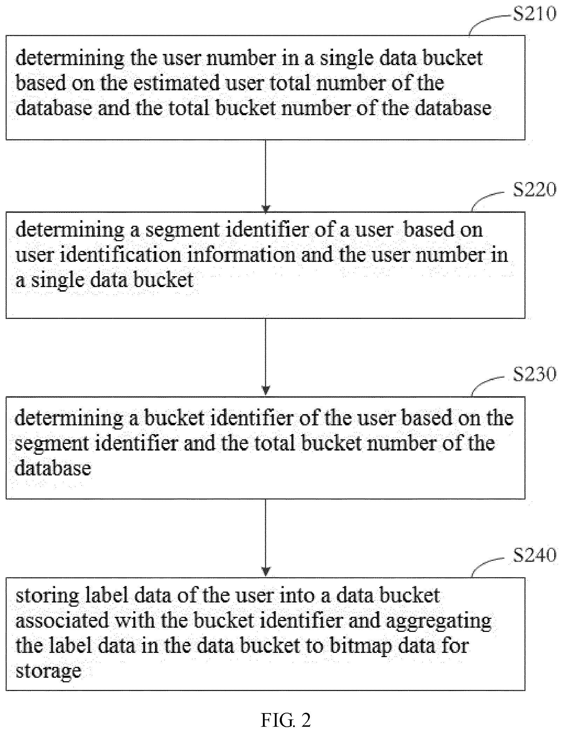

FIG. 2 is a flowchart of a method for processing label data according to another embodiment of the present disclosure. The embodiment is an alternative implementation provided based on the above embodiment. As illustrated in FIG. 2, the method may include the following.

At block S210, the user number in a single data bucket is determined based on the estimated user total number of the database and the total bucket number of the database.

The estimated user total number is an experience value preset artificially. The total bucket number refers to the total number of data buckets in the database. In detail, a quotient of dividing the estimated user total number by the total bucket number is configured as a user number threshold in a single data bucket. The user number in a single data bucket is equal to or greater than the user number threshold.

At block S220, a segment identifier of a user is determined based on user identification information and the user number in a single data bucket.

The user identification information is a unique integer, i.e., an integer different from user identification information of other users. In detail, a quotient of dividing the user identification information by the user number in a single data bucket is configured as the segment identifier, which may also be an integer.

At block S230, a bucket identifier of the user is determined based on the segment identifier and the total bucket number of the database.

In detail, the bucket identifier is obtained based on a reminder of the segment identifier mod the total bucket number. By determining the segment identifier based on the estimated user total number and the total bucket number in the database and the user identification information, the user numbers in different segments are averaged. By determining the bucket identifier based on the segment identifier, the users in different data buckets do not cross, such that when querying calculation is performed subsequently, calculation results of the data buckets can be directly gathered without duplicate removal, thus improve the data querying efficiency of the label data.

At block S240, label data of the user is stored in a data bucket associated with the bucket identifier and the label data in the data bucket is aggregated to bitmap data for storage.

In a possible implementation, the method further includes: in response to a label query request, determining query results of at least two data buckets based on the bitmap data of the at least two data buckets in the database, and gathering the query results to obtain a label query result.

In detail, in response to a query request containing a label querying condition, aggregation is performed on the label data in different data buckets to obtain the bitmap data of the different data buckets. A query result satisfying the label querying condition is determined in each data bucket based on the bitmap data of the data bucket. The query results of different data buckets are gathered to obtain the label query result, i.e., the user number in the label query result is a sum of the number of users satisfying the label querying condition in different data buckets. For example, the database includes two data buckets, two users for which the user identification information after Hash mapping is 1 and 7 in data bucket 1 satisfy the label querying condition, and one user for which the user identification information after Hash mapping is 3 in data bucket 2 satisfies the label querying condition, then the label query result is the above three users.

Since the users in different data buckets do not cross, duplicate removal is not required in the label data query process. In other words, database bitmap data may be generated without performing a union operation, an intersection operation, a complementary operation, a difference operation on the bitmap data of different data buckets, and the query result is determined based on the database bitmap data. Having the users in different data buckets not cross further improve the data querying efficiency of the label data.

With the technical solution of the embodiment of the present disclosure, during the data storage, by having the users in different data buckets not cross, duplicate removal is not required in the label data query process. The query results of different data buckets can be obtained respectively, and directly gathered to obtain the database query result, thereby further improving the data querying efficiency of the label data.

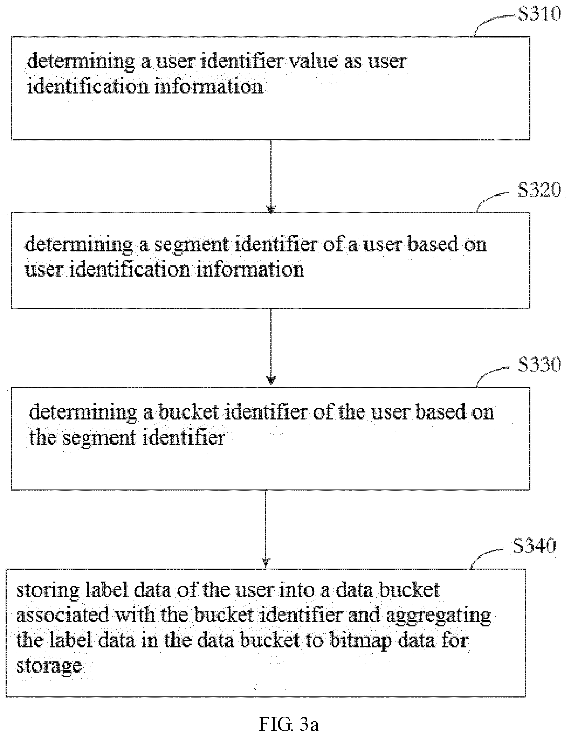

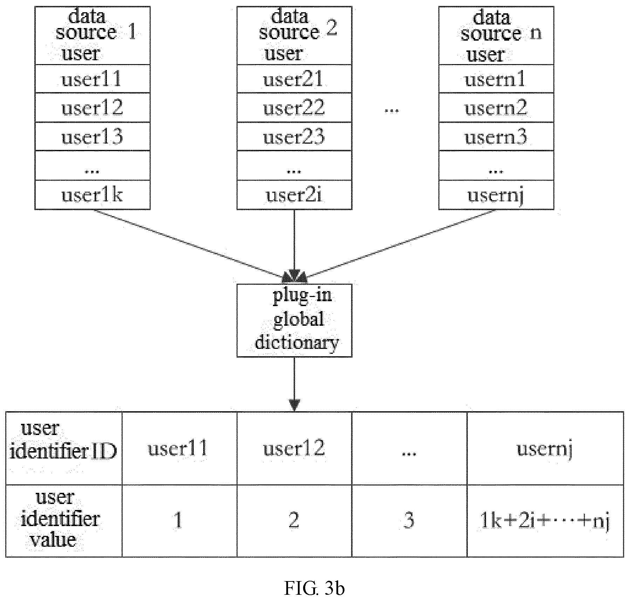

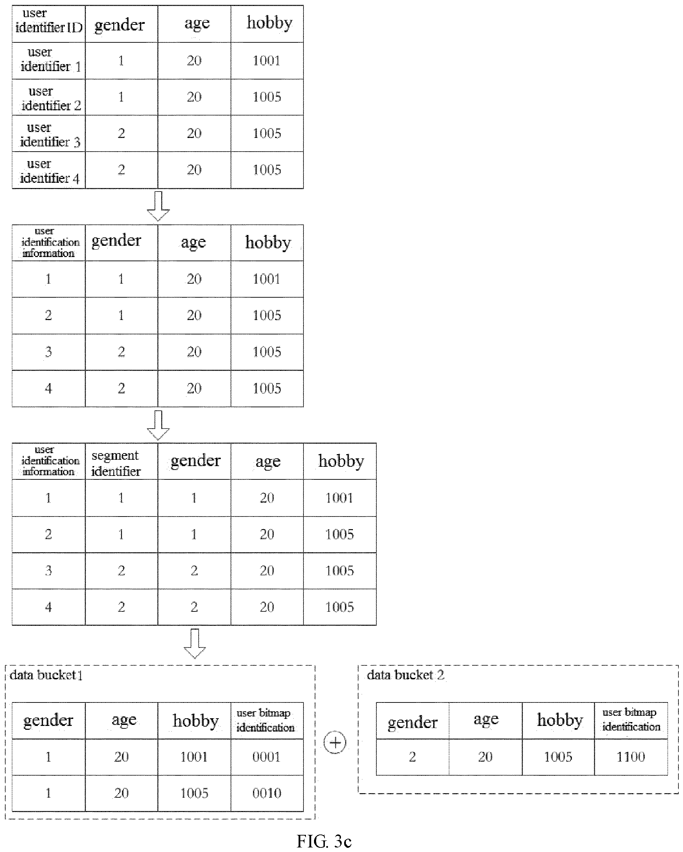

FIG. 3a is a flowchart of a method for processing label data according to another embodiment of the present disclosure. The embodiment is an alternative implementation provided based on the above embodiments. As illustrated in FIG. 3, the method may include the following.

At block S310, a user identifier value is determined as user identification information.

The user identifier value is a unique integer, and is one of consecutive numbers used as user identifier values of users. In detail, different user identifiers may be mapped to integers within a consecutive range based on a plug-in independent global dictionary mechanism, i.e., a global unique integer is generated for each user and the user identifier values of different users are consecutive. The plug-in independent global dictionary is a global dictionary decoupled from the data storage and query engine, which may support different data processing engines. In other words, different data processing engines may reuse the global dictionary.

FIG. 3b is a schematic diagram of a global dictionary operation according to an embodiment of the present disclosure. As illustrated in FIG. 3b, the plug-in global dictionary may be used to convert each user identifier of a distinct data source to a global unique integer and user identifier values of different users are consecutive. It should be noted that, a mapping relation between the user identifier and the global unique value may be established by using a big data outline processing technology in the embodiment of the present disclosure, which may improve an efficiency of constructing the user identifier value and the supportable data amount compared to a method of constructing the user identifier value using a single machine.

Since the user identifier value is globally unique, a collision of user identifier values can be avoided. Further, the different user identifier values are consecutive, i.e., the user identifiers are mapped to values in consecutive range, such that the density of the bitmap data in the candidate data bucket may be improved, the storage space of the bitmap data may be reduced and the data querying efficiency of the bitmap data can be improved.

In an alternative implementation, determining the user identifier value includes determining a latest user identifier value based on metadata in the database, and determining the user identifier value based on the latest user identifier value. The user identifier value and the latest user identifier value are consecutive.

The database may have the metadata for recording the latest user identifier value, and the database may be a massively parallel processing (MPP) database. In detail, the user identifier value may be obtained by adding 1 to the latest user identifier value. By directly obtaining the latest user identifier value from the metadata in the database, an efficiency of determining the user identifier value may be further improved compared to a method of traversing existing user identifier values in the database to obtain the latest user identifier value.

At block S320, a segment identifier of the user is determined based on user identification information.

In detail, a quotient of dividing the user identification information by the user number in a single data bucket is configured as the segment identifier. Since the user identification information is consecutive, different user identification information corresponding to one segment identifier is consecutive.

At S330, a bucket identifier of the user is determined based on the segment identifier. the bucket identifier is obtained based on a reminder of the segment identifier mod the total bucket number in the database. Different users with consecutive user identification information corresponding to the same segment identifier are classified to the same data bucket by hashing.

At block S340, label data of the user is stored in a data bucket associated with the bucket identifier and the label data in the data bucket is aggregated to bitmap data for storage.

Since the user identifier value is unique and the user identifier values are consecutive, the user identifier values in each data bucket are consecutive and do not overlap after determining the data bucket of users. In other words, each data bucket stores consecutive user identifier values, such that the mapped user bitmap identification is less in bits, thus improving the data storage and querying efficiency. In detail, since different user identifier values are consecutive, if the first bit and the seventh bit in one user bitmap identification are both 1 and other bits are 0, then the user bitmap identification only needs 7 bits. When the user identifier values are not consecutive, if the first bit and the 10000th bit in one user bitmap identification are both 1 and other bits are 0, then the user bitmap identification needs at least 100000 bits, such that the more storage space is wasted and the calculating efficiency is low.

FIG. 3c is a schematic diagram of processing label data according to an embodiment of the present disclosure. As illustrated in FIG. 3c, for example, the label data of the user includes four dimensions referring to user identifier, age, gender and hobby, and there are four users including user 1, user 2, user 3 and user 4. Based on the global dictionary, the user identifiers, user 1, user 2, user 3 and user 4, are converted into consecutive user identification information, 1, 2, 3 and 4. The segment identifier of the user identification information 1 and 2 is determined as 1, and the segment identifier of the user identification information 3 and 4 is determined as 2. Two users corresponding to the segment identifier 1 are classified into data bucket 1, and two users corresponding to the segment identifier 2 are classified into data bucket 2. Further, the label data of users in each data bucket is aggregated to bitmap data to obtain the user bitmap identification. In detail, the data bucket 1 includes one piece of bitmap data with the gender represented by 1, the age of 20, the hobby represented by 1001, and the user bitmap identification of 0001, and another piece of bitmap data with the gender represented by 1, the age of 30, the hobby represented by 1005, and the user bitmap identification of 0010. The data bucket 2 includes one piece of bitmap data with the gender represented by 2, the age of 20, the hobby represented by 1005, and the user bitmap identification of 1100.

With the technical solution according to the embodiment of the present disclosure, by converting the user identifiers from different data sources into unique and consecutive integers through the global dictionary, the collision of user identifier values can be avoided. Further, since each data bucket stores consecutive user identifier values, the mapped user bitmap identification is less in bits, such that the density of the bitmap data in the candidate data bucket may be improved, the data storage and querying efficiency can be improved and the storage space may be reduced.

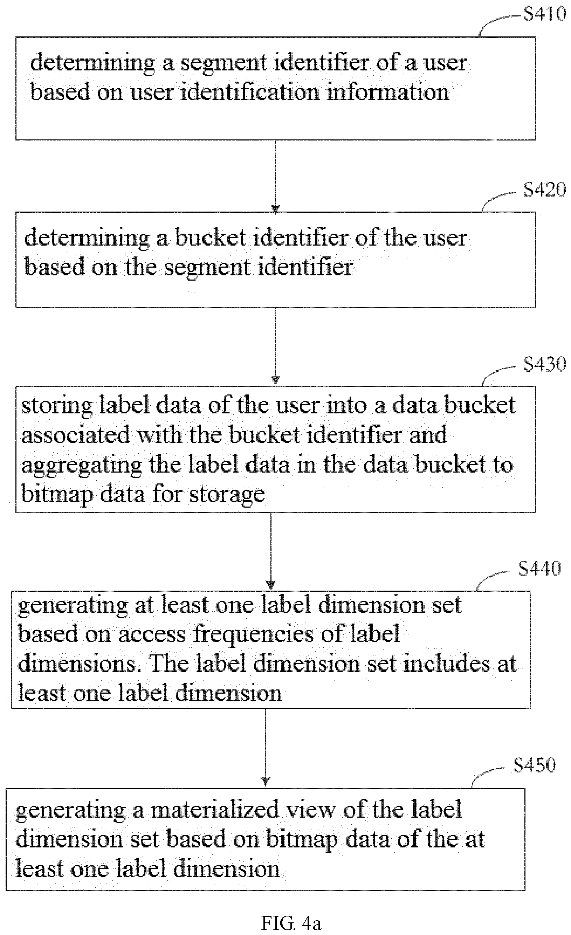

FIG. 4a is a flowchart of a method for processing label data according to another embodiment of the present disclosure. The embodiment is an alternative implementation provided based on the above embodiment. As illustrated in FIG. 4a, the method may include the following.

At block S410, a segment identifier of a user is determined based on user identification information.

At block S420, a bucket identifier of the user is determined based on the segment identifier.

At block S430, label data of the user is stored in a data bucket associated with the bucket identifier and the label data in the data bucket is aggregated to bitmap data for storage.

At block S440, at least one label dimension set is generated based on access frequencies of label dimensions. The label dimension set includes at least one label dimension.

In detail, at least one label dimension may be selected based on the access frequencies of the label dimensions (for example the usage frequencies of user profile dimension, behavior feature dimension during audience targeting) to construct the label dimension set. It should be noted that, the construction of the label dimension set is not limited in the embodiments of the present disclosure. For example, there are nine label dimensions, including 1, 2 ... 8, and 9. The label dimensions may be sorted according to the access frequency of each label dimension, and the first three label dimensions are considered as one label dimension set, the middle three label dimensions are considered as one label dimension set, and the last three dimensions are considered as one label dimension set. Or, the first three label dimensions are considered as one label dimension set, or the first five label dimensions are considered as one label dimension set. It should be noted that, an aggregation dimension of the label dimension set shows a negative correlation with the number of label dimensions in the label dimension set. For example, the label dimension set containing only one label dimension is considered as a high dimensional set, while the label dimension set containing three label dimensions is considered as an intermediate dimensional set.

At block S450, a materialized view of the label dimension set is generated based on bitmap data of the at least one label dimension.

The materialized view is configured to store data based on a remote table. The materialized view created from a data warehouse is an aggregation view and can be updated periodically. The embodiment trades space for time, and by generating the materialized view for a data table which has a large amount of data and is time consuming, some query requests may hit the materialized view directly to obtain the query results, thus improving the querying efficiency.

In a possible implementation, the method further includes: in response to a label query request carrying a screening condition, configuring a data table satisfying the screening condition as a candidate data table, in which the data table includes a bitmap data table and a materialized view table; determining attribute information of each candidate data table, in which the attribute information includes at least one of machine room information, the number of dimensions, the number of label records; selecting a target data table from one or more candidate data tables based on the attribute information; determining a label query result based on the target data table.

The bitmap data table may be a basic data table, which is a summary table of bitmap data of respective data buckets in the database. The materialized view table is a data table associated with the materialized view of the label dimension set. In detail, the more concentrated the machine information, the less the number of dimensions, the less the number of label records, the bigger the possibility that the candidate data table is selected as the target data table.

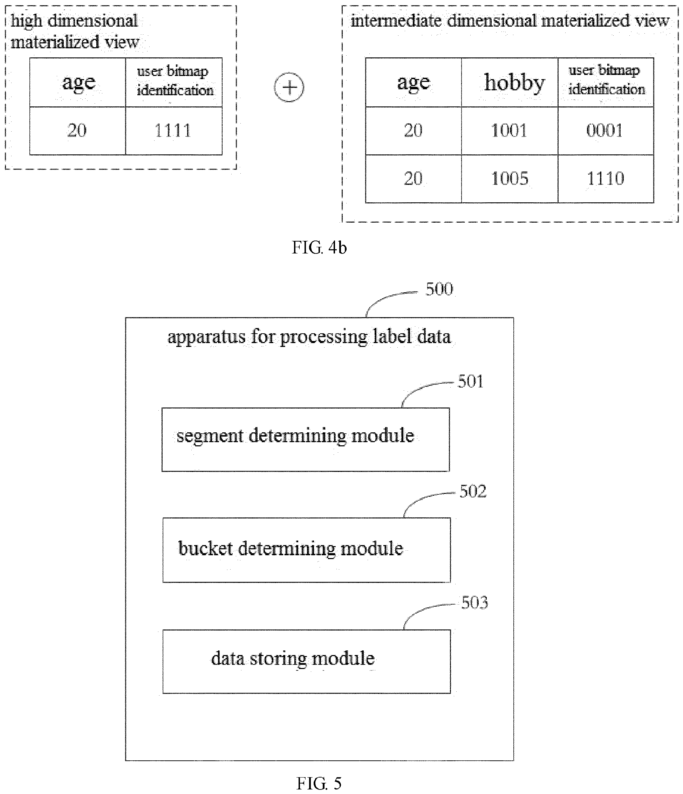

By trading space for time, and constructing the materialized view by performing pre-aggregating operation in the data base for common high dimensional or intermediate dimensional, the following advantages can be brought.
(a) directly hit the materialized view, the materialized view is transparent for the super-stratum query. For a query statement, typically, there may be one basic data table and at least one materialized view satisfying the screening condition in the underlying. When the screening is performed with multiple conditions crossed and combined, an optimum table is smartly selected for querying based on statistic information such as dimensions and indexes, such that acquisition and dynamic calculation of single label dimension user bitmaps corresponding to the multiple conditions can be avoided and the time is saved greatly. For example, when querying the number of users satisfying age=20, the high dimensional materialized view (as illustrated in FIG. 4b) is directly hit. When querying the number of users satisfying age=20 and interest=1005, the intermediate dimensional materialized view (as illustrated in FIG. 4b) is directly hit.
(b) indirectly hit, i.e., the basic data table is hit or at least one high or intermediate dimensional materialized view is hit, but a further aggregation calculation is required to obtain the query result. Since the high or intermediate dimensional materialized view has already went through the pre-aggregation operation compared to the basic data table, the number of dimensions and records is less, such that the query performance may be improved exponentially. For example, when querying users satisfying interest=1005, the intermediate dimensional materialized view (as illustrated in FIG. 4b) is indirectly hit.

With the technical solution according to the embodiment of the present disclosure, technologies such as the plug-in global dictionary, construction of density bitmap data, and pre-aggregation generation of materialize view are proposed innovatively based on the MPP data base and effective compression bitmap storage, such that the amount of storage of the label data is greatly decreased, the estimate query of users is accelerated, and the storage and query performance under a scenario of mass data can be addressed effectively.

FIG. 5 is a block diagram of an apparatus for processing label data according to an embodiment of the present disclosure. As illustrated in FIG. 5, the apparatus 500 may include a segment determining module 501, a bucket determining module 502, and a data storing module 503.

The segment determining module 501 is configured to determine a segment identifier of a user based on user identification information.

The bucket determining module 502 is configured to determine a bucket identifier of the user based on the segment identifier.

The data storing module 503 is configured to store label data of the user into a data bucket associated with the bucket identifier and aggregate the label data in the data bucket to bitmap data for storage.

In an alternative implementation, the segment determining module 501 includes a user number determining unit configured to determine the user number in a single data bucket based on the estimated user total number of a database and the bucket total number of the database, and a segment determining unit configured to determine the segment identifier based on the user identification information and the user number in a single data bucket.

In an alternative implementation, the bucket determining module 502 is configured to determine the bucket identifier based on the segment identifier and the bucket total number.

In an alternative implementation, the apparatus 500 further includes an identifier value determining module configured to determine a user identifier value as the user identification information. The user identifier value is a unique integer, and the user identifier value and user identifier values of other users are consecutive.

In an alternative implementation, the identification value determining module includes a latest identifier value determining unit and a current identifier value determining unit.

The latest identifier value determining unit is configured to determine a latest user identifier value based on metadata of the database.

The current identifier value determining unit is configured to determine the user identifier value based on the latest user identifier value. The user identifier value and the latest user identifier value are consecutive.

In an alternative implementation, the apparatus 500 further includes a materialized view generating module including a dimension set generating unit and a materialized view generating unit.

The dimension set generating unit is configured to generate at least one label dimension set based on access frequencies of label dimensions. The label dimension set includes at least one label dimension.

The materialized view generating unit is configured to generate a materialized view of the label dimension set based on bitmap data of the at least one label dimension.

In an alternative implementation, the apparatus 500 further includes a first querying module including an optimum table determining unit, an attribute information determining unit, a target table determining unit and a query result determining unit.

The optimum table determining unit is configured to determine a data table satisfying a screening condition as a candidate data table in response to a label query request carrying the screening condition. The data table includes a bitmap data table and a materialized view table.

The attribute information determining unit is configured to attribute information of each candidate data table. The attribute information includes at least one of machine room information, the number of dimensions, and the number of label records.

The target table determining unit is configured to select a target data table from one or more candidate data tables based on the attribute information of each candidate data table.

The query result determining unit is configured to determine a label query result based on the target data table.

In an alternative implementation, the apparatus 500 further includes a second querying module including a bucket querying unit and a result gathering unit.

The bucket querying unit is configured to determine query results of at least two data buckets based on the bitmap data of the at least two data buckets in response to a label query request.

The result gathering unit is configured to gather the query results of the at least two data buckets to obtain a label query result.

With the technical solution according to the embodiment of the present disclosure, technologies such as the plug-in global dictionary, construction of density bitmap data, and pre-aggregation generation of materialize view are proposed innovatively based on the MPP data base and effective compression bitmap storage, such that the amount of storage of the label data is greatly decreased, the estimate query of users is accelerated, and the storage and query performance under a scenario of mass data can be addressed effectively.

According to embodiments of the present disclosure, there is further provided an electronic device and a computer readable storage medium.

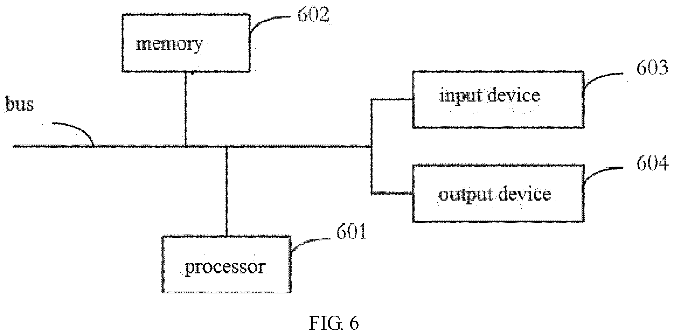

FIG. 6 is a block diagram of an electronic device for implementing a method for processing label data according to an embodiment of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device includes: one or more processors 601, memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 602 is configured to store non-transitory software programs, non-transitory computer executable programs and modules, such as program instructions/modules (for example, the segment determining module 501, the bucket determining module 502, and the data storing module 503 shown in FIG. 5) corresponding to the method in the embodiment of the present disclosure. The processor 601 executes various functional applications and data processing of the server by running non-transitory software programs, instructions, and modules stored in the memory 602, that is, implementing the method in the foregoing method embodiments.

The memory 602 may include a storage program area and a storage data area, where the storage program area may store an operating system and application programs required for at least one function. The storage data area may store data created according to the use of the electronic device for implementing the method. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 603 and an output device 604. The processor 601, the memory 602, the input device 603, and the output device 604 may be connected through a bus or in other manners. In FIG. 6, the connection through the bus is taken as an example.

The input device 603 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

In the technical solution of the present disclosure, technologies such as the plug-in global dictionary, construction of density bitmap data, and pre-aggregation generation of materialize view are proposed innovatively based on the MPP data base and effective compression bitmap storage, such that the amount of storage of the label data is greatly decreased, the estimate query of users is accelerated, and the storage and query performance under a scenario of mass data can be addressed effectively.

The above specific embodiments do not constitute a limitation on the protection scope of the present disclosure.

## Claims

1. A method for processing label data, and comprising:
determining (S110, S320, S410) a segment identifier of a user based on user identification information comprises the steps of:
determining (S210) a user number in a single data bucket based on an estimated user total number and a bucket total number of a database, wherein the estimated user total number is an experience value preset artificially; the total bucket number refers to the total number of data buckets in the database; and the user number is equal to or greater than a quotient of dividing the estimated user total number by the total bucket number; and
determining (S220) the segment identifier based on the user identification information and the user number, wherein the user identification information is a unique integer, and the segment identifier is a quotient of dividing the user identification information by the user number in a single data bucket;
determining (S120, S330, S420) a bucket identifier of the user based on the segment identifier comprises the step of:
calculating the segment identifier mod the total number of data buckets in the database;
storing (S130, S240, S340, S430) label data of the user into a data bucket associated with the bucket identifier and aggregating the label data in the data bucket to bitmap data for storage, wherein the label data in the data bucket is aggregated to the bitmap data by:
aggregating the label data with the same value for the label dimension;
performing a Hash calculation on the user identification information to obtain a mapped integer; and
constructing a user bitmap identification where each bit in the user bitmap identification is assigned to a value of 0 or 1 to indicate whether a user exists at the mapped integer position.

2. The method of claim 1, wherein determining (S120, S330, S420) the bucket identifier of the user based on the segment identifier comprises:
determining (S230) the bucket identifier based on the segment identifier and a bucket total number of a database.

3. The method of any of claims 1-2, further comprising:
determining (S310) a user identifier value as the user identification information, wherein the user identifier value is a unique integer, and the user identifier value and user identifier values of other users are consecutive.

4. The method of claim 3, wherein determining (S310) the user identifier value comprises:
determining a latest user identifier value in a database based on metadata of the database; and
determining the user identifier value based on the latest user identifier value, wherein the user identifier value and the latest user identifier value are consecutive.

5. The method of any of claims 1-4, further comprising:
generating (S440) at least one label dimension set based on access frequencies of label dimensions, wherein the at least one label dimension set comprises at least one label dimension; and
generating (S450) a materialized view of the at least one label dimension set based on bitmap data of the at least one label dimension.

6. The method of claim 5, further comprising:
determining a data table satisfying a screening condition as a candidate data table in response to a label query request carrying the screening condition, wherein the data table comprises a bitmap data table and a materialized view table;
determining attribute information of each candidate data table, wherein the attribute information comprises at least one of machine room information, a number of dimensions and a number of label records;
selecting a target data table from one or more candidate data tables based on the attribute information of each candidate data table; and
determining a label query result based on the target data table.

7. The method of any of claims 1-5, further comprising:
determining query results of at least two data buckets in a database based on bitmap data of the at least two data buckets in response to a label query request; and
gathering the query results of the at least two data buckets to obtain a label query result.

8. An apparatus (500) for processing label data, and comprising:
a segment determining module (501), configured to determine a segment identifier of a user based on user identification information, wherein the segment determining module (501) comprises:
a user number determining unit, configured to determine a user number in a single data bucket based on an estimated user total number of a database and a bucket total number of the database, wherein the estimated user total number is an experience value preset artificially; the total bucket number refers to the total number of data buckets in the database; and the user number is equal to or greater than a quotient of dividing the estimated user total number by the total bucket number; and
a segment determining unit, configured to determine the segment identifier based on the user identification information and the user number, wherein the user identification information is a unique integer, and the segment identifier is a quotient of dividing the user identification information by the user number in a single data bucket;
a bucket determining module (502), configured to determine a bucket identifier of the user based on the segment identifier by calculating the segment identifier mod the total number of data buckets in the database; and
a data storing module (503), configured to store label data of the user into a data bucket associated with the bucket identifier and aggregate the label data in the data bucket to bitmap data for storage, wherein the label data in the data bucket is aggregated to the bitmap data by:
aggregating the label data with the same value for the label dimension;
performing a Hash calculation on the user identification information to obtain a mapped integer; and
constructing a user bitmap identification where each bit in the user bitmap identification is assigned to a value of 0 or 1 to indicate whether a user exists at the mapped integer position.

9. The apparatus (500) of claim 8, wherein the bucket determining module (502) is configured to:
determine the bucket identifier based on the segment identifier and a bucket total number of a database.

10. The apparatus (500) of any of claims 8-9, further comprising:
an identifier value determining module, configured to determine a user identifier value as the user identification information, wherein the user identifier value is a unique integer, and the user identifier value and user identifier values of other users are consecutive.

11. The apparatus (500) of claim 8, further comprising a materialized view generating module comprising:
a dimension set generating unit, configured to generate at least one label dimension set based on access frequencies of label dimensions, wherein the at least one label dimension set comprises at least one label dimension; and
a materialized view generating unit, configured to generate a materialized view of the at least one label dimension set based on bitmap data of the at least one label dimension.

12. An electronic device, comprising:
at least one processor; and
a memory communicatively connected to the at least one processor;
wherein the memory stores instructions executable by the at least one processor, the instructions are executed by the at least one processor to cause the at least one processor to perform the method of any of claims 1-7.

13. A non-transitory computer readable storage medium, having computer instructions stored therein, wherein the computer instructions are configured to cause a computer to perform the method of any of claims 1-7.

## Patentansprüche

1. Verfahren zum Verarbeiten von Etikettendaten, und umfassend:
Bestimmen (S110, S320, S410) einer Segmentkennung eines Benutzers auf Grundlage von Benutzeridentifikationsinformationen, umfassend die Schritte:
Bestimmen (S210) einer Benutzeranzahl in einem einzelnen Daten-Bucket auf Grundlage einer geschätzten Gesamt-Benutzeranzahl und einer Gesamt-Bucket-Anzahl einer Datenbank, wobei die geschätzte Gesamt-Benutzeranzahl ein vorab künstlich eingestellter Erfahrungswert ist; sich die Gesamt-Bucket-Anzahl auf die Gesamtanzahl an Daten-Buckets in der Datenbank bezieht; und die Benutzeranzahl größer oder gleich einem Quotienten des Dividierens der geschätzten Gesamt-Benutzeranzahl durch die Gesamt-Bucket-Anzahl ist; und
Bestimmen (S220) der Segmentkennung auf Grundlage der Benutzeridentifikationsinformationen und der Benutzeranzahl, wobei es sich bei den Benutzeridentifikationsinformationen um eine einzigartige ganze Zahl handelt und die Segmentkennung ein Quotient des Dividierens der Benutzeridentifikationsinformationen durch die Benutzeranzahl in einem einzelnen Daten-Bucket ist;
Bestimmen (S120, S330, S420) einer Bucket-Kennung des Benutzers auf Grundlage der Segmentkennung, umfassend den Schritt:
Berechnen der Segmentkennung mod die Gesamtanzahl an Daten-Buckets in der Datenbank;
Speichern (S130, S240, S340, S430) von Etikettendaten des Benutzers in einem Daten-Bucket, der zu der Bucket-Kennung gehört, und Zusammenstellen der Etikettendaten in dem Daten-Bucket zu Bitmap-Daten zur Speicherung, wobei die Etikettendaten in dem Daten-Bucket zu den Bitmap-Daten zusammengestellt werden durch:
Zusammenstellen der Etikettendaten mit demselben Wert für die Etikettendimension;
Durchführen einer Hash-Berechnung an den Benutzeridentifikationsinformationen, um eine abgebildete ganze Zahl zu erhalten; und
Konstruieren einer Benutzer-Bitmap-Identifikation, wobei jedes Bit in der Benutzer-Bitmap-Identifikation einem Wert 0 oder 1 zugeordnet wird, um anzuzeigen, ob an der Position der abgebildeten ganzen Zahl ein Benutzer vorhanden ist.

2. Verfahren nach Anspruch 1, wobei das Bestimmen (S120, S330, S420) der Bucket-Kennung des Benutzers auf Grundlage der Segmentkennung umfasst:
Bestimmen (S230) der Bucket-Kennung auf Grundlage der Segmentkennung und einer Gesamt-Bucket-Anzahl einer Datenbank.

3. Verfahren nach einem der Ansprüche 1 bis 2, ferner umfassend:
Bestimmen (S310) eines Benutzerkennungswertes als die Benutzeridentifikationsinformationen, wobei der Benutzerkennungswert eine einzigartige ganze Zahl ist und der Benutzerkennungswert und Benutzerkennungswerte anderer Benutzer aufeinander folgende sind.

4. Verfahren nach Anspruch 3, wobei das Bestimmen (S310) des Benutzerkennungswertes umfasst:
Bestimmen eines aktuellsten Benutzerkennungswertes in einer Datenbank auf Grundlage von Metadaten der Datenbank; und
Bestimmen des Benutzerkennungswertes auf Grundlage des aktuellsten Benutzerkennungswertes, wobei der Benutzerkennungswert und der aktuellste Benutzerkennungswert aufeinander folgen.

5. Verfahren nach einem der Ansprüche 1 bis 4, ferner umfassend:
Erzeugen (S440) mindestens eines Etikettendimensionssatzes auf Grundlage von Zugriffshäufigkeiten von Etikettendimensionen, wobei die mindestens eine Etikettendimensionssatz mindestens eine Etikettendimension umfasst; und
Erzeugen (S450) einer materialisierten Ansicht des mindestens einen Etikettendimensionssatzes auf Grundlage von Bitmap-Daten der mindestens einen Etikettendimension.

6. Verfahren nach Anspruch 5, ferner umfassend:
Bestimmen einer Datentabelle, welche eine Screening-Bedingung erfüllt, als eine in Frage kommende Datentabelle in Reaktion auf eine Etikettenabfrageanforderung, welche die Screening-Bedingung trägt, wobei die Datentabelle eine Bitmap-Datentabelle und eine Tabelle einer materialisierten Ansicht umfasst;
Bestimmen von Attributinformationen jeder in Frage kommenden Datentabelle, wobei die Attributinformationen mindestens eines aus Maschinenrauminformationen, einer Anzahl an Dimensionen und einer Anzahl an Etikettenaufzeichnungen umfassen;
Auswählen einer Zieldatentabelle aus einer oder mehreren in Frage kommenden Datentabellen auf Grundlage der Attributinformationen jeder in Frage kommenden Datentabelle; und
Bestimmen eines Etikettenabfrageergebnisses auf Grundlage der Zieldatentabelle.

7. Verfahren nach einem der Ansprüche 1 bis 5, ferner umfassend:
Bestimmen von Abfrageergebnissen von mindestens zwei Daten-Buckets in einer Datenbank auf Grundlage von Bitmap-Daten der mindestens zwei Daten-Buckets in Reaktion auf eine Etikettenabfrageanforderung; und
Zusammenstellen der Abfrageergebnisse der mindestens zwei Daten-Buckets, um ein Etikettenabfrageergebnis zu erhalten.

8. Vorrichtung (500) zum Verarbeiten von Etikettendaten, und umfassend:
ein Segmentbestimmungsmodul (501), konfiguriert zum Bestimmen einer Segmentkennung eines Benutzers auf Grundlage von Benutzeridentifikationsinformationen, wobei das Segmentbestimmungsmodul (501) umfasst:
eine Benutzeranzahl-Bestimmungseinheit, konfiguriert zum Bestimmen einer Benutzeranzahl in einem einzelnen Daten-Bucket auf Grundlage einer geschätzten Gesamt-Benutzeranzahl einer Datenbank und einer Gesamt-Bucket-Anzahl der Datenbank, wobei die geschätzte Gesamt-Benutzeranzahl ein vorab künstlich eingestellter Erfahrungswert ist; sich die Gesamt-Bucket-Anzahl auf die Gesamtanzahl an Daten-Buckets in der Datenbank bezieht; und die Benutzeranzahl größer oder gleich einem Quotienten des Dividierens der geschätzten Gesamt-Benutzeranzahl durch die Gesamt-Bucket-Anzahl ist; und
eine Segmentbestimmungseinheit, konfiguriert zum Bestimmen der Segmentkennung auf Grundlage der Benutzeridentifikationsinformationen und der Benutzeranzahl, wobei es sich bei den Benutzeridentifikationsinformationen um eine einzigartige ganze Zahl handelt und die Segmentkennung ein Quotient des Dividierens der Benutzeridentifikationsinformationen durch die Benutzeranzahl in einem einzelnen Daten-Bucket ist;
ein Bucket-Bestimmungsmodul (502), konfiguriert zum Bestimmen einer Bucket-Kennung des Benutzers auf Grundlage der Segmentkennung durch Berechnen der Segmentkennung mod die Gesamtanzahl an Daten-Buckets in der Datenbank; und
ein Datenspeichermodul (503), konfiguriert zum Speichern von Etikettendaten des Benutzers in einem Daten-Bucket, der zu der Bucket-Kennung gehört, und Zusammenstellen der Etikettendaten in dem Daten-Bucket zu Bitmap-Daten zur Speicherung, wobei die Etikettendaten in dem Daten-Bucket zu den Bitmap-Daten zusammengestellt werden durch:
Zusammenstellen der Etikettendaten mit demselben Wert für die Etikettendimension;
Durchführen einer Hash-Berechnung an den Benutzeridentifikationsinformationen, um eine abgebildete ganze Zahl zu erhalten; und
Konstruieren einer Benutzer-Bitmap-Identifikation, wobei jedes Bit in der Benutzer-Bitmap-Identifikation einem Wert 0 oder 1 zugeordnet wird, um anzuzeigen, ob an der Position der abgebildeten ganzen Zahl ein Benutzer vorhanden ist.

9. Vorrichtung (500) nach Anspruch 8, wobei das Bucket-Bestimmungsmodul (502) konfiguriert ist zum:
Bestimmen der Bucket-Kennung auf Grundlage der Segmentkennung und einer Gesamt-Bucket-Anzahl einer Datenbank.

10. Vorrichtung (500) nach einem der Ansprüche 8 bis 9, ferner umfassend:
ein Kennungswert-Bestimmungsmodul, konfiguriert zum Bestimmen eines Benutzerkennungswertes als die Benutzeridentifikationsinformationen, wobei der Benutzerkennungswert eine einzigartige ganze Zahl ist und der Benutzerkennungswert und Benutzerkennungswerte anderer Benutzer aufeinander folgende sind.

11. Vorrichtung (500) nach Anspruch 8, ferner umfassend ein Erzeugungsmodul für eine materialisierte Ansicht, umfassend:
eine Dimensionssatz-Erzeugungseinheit, konfiguriert zum Erzeugen mindestens eines Etikettendimensionssatzes auf Grundlage von Zugriffshäufigkeiten von Etikettendimensionen, wobei die mindestens eine Etikettendimensionssatz mindestens eine Etikettendimension umfasst; und
eine Erzeugungseinheit für eine materialisierte Ansicht, konfiguriert zum Erzeugen einer materialisierten Ansicht des mindestens einen Etikettendimensionssatzes auf Grundlage von Bitmap-Daten der mindestens einen Etikettendimension.

12. Elektronische Einheit, umfassend:
mindestens einen Prozessor; und
einen Speicher, welcher zum Datenaustausch mit dem mindestens einen Prozessor verbunden ist;
wobei der Speicher Anweisungen speichert, welche von dem mindestens einen Prozessor ausführbar sind, die Anweisungen von dem mindestens einen Prozessor ausgeführt werden, um zu bewirken, dass der mindestens eine Prozessor das Verfahren nach einem der Ansprüche 1 bis 7 durchführt.

13. Nicht-flüchtiges computerlesbares Speichermedium mit darin gespeicherten Computeranweisungen, wobei die Computeranweisungen dafür konfiguriert sind zu bewirken, dass ein Computer das Verfahren nach einem der Ansprüche 1 bis 7 durchführt.

## Revendications

1. Procédé pour traiter des données d'étiquette, et comprenant :
déterminer (S110, S320, S410) un identifiant de segment d'un utilisateur sur la base d'informations d'identification d'utilisateur, qui comprend les étapes :
déterminer (S210) un nombre d'utilisateurs dans un seul compartiment de données sur la base d'un nombre total d'utilisateurs estimé et d'un nombre total de compartiments d'une base de données, dans lequel le nombre total d'utilisateurs estimé est une valeur d'expérience préfixée artificiellement ; le nombre total de compartiments se réfère au nombre total de compartiments de données dans la base de données ; et le nombre d'utilisateurs est égal ou supérieur à un quotient de la division du nombre total d'utilisateurs estimé par le nombre total de compartiments ; et
déterminer (S220) l'identifiant de segment sur la base des informations d'identification d'utilisateur et du nombre d'utilisateurs, dans lequel les informations d'identification d'utilisateur sont un entier unique d'identification, et l'identifiant de segment est un quotient de division des informations d'identification d'utilisateur par le nombre d'utilisateurs dans un seul compartiment de données ;
déterminer (S 120, S330, S420) un identifiant de compartiment de l'utilisateur sur la base de l'identifiant de segment comprend l'étape de :
calculer l'identifiant de segment mod le nombre total de compartiments de données dans la base de données ;
stocker (S130, S240, S340, S430) des données d'étiquette de l'utilisateur dans un compartiment de données associé à l'identifiant de compartiment et agréger les données d'étiquette dans le compartiment de données en données bitmap pour un stockage, dans lequel les données d'étiquette dans le compartiment de données sont agrégées en données bitmap par :
agrégation des données d'étiquette avec la même valeur pour la dimension d'étiquette ;
réalisation d'un calcul de hachage sur les informations d'identification d'utilisateur pour obtenir un entier mappé ; et
construction d'une identification de bitmap d'utilisateur où chaque bit dans l'identification de bitmap d'utilisateur est affectée se voit attribuer une valeur de 0 ou de 1 pour indiquer si un utilisateur existe à la position d'entier mappé.

2. Procédé de la revendication 1, dans lequel déterminer (S120, S330, S420) l'identifiant de compartiment de l'utilisateur sur la base de l'identifiant de segment comprend :
déterminer (230) l'identifiant de compartiment sur la base de l'identifiant de segment et d'un nombre total de compartiments d'une base de données.

3. Procédé de l'une quelconque des revendications 1-2, comprenant en outre :
déterminer (S310) une valeur d'identifiant d'utilisateur comme informations d'identification d'utilisateur, dans lequel la valeur d'identifiant d'utilisateur est un entier unique, et la valeur d'identifiant d'utilisateur et les valeurs d'identifiant d'utilisateur d'autres utilisateurs sont consécutives.

4. Procédé de la revendication 3, dans lequel déterminer (S310) la valeur d'identifiant d'utilisateur comprend :
déterminer une valeur d'identifiant d'utilisateur la plus récente dans une base de données sur la base de métadonnées de la base de données ; et
déterminer la valeur d'identifiant d'utilisateur sur la base de la valeur d'identifiant d'utilisateur la plus récente, dans lequel la valeur d'identifiant d'utilisateur et la valeur d'identifiant d'utilisateur la plus récente sont consécutives.

5. Procédé de l'une quelconque des revendications 1-4, comprenant en outre :
générer (440) au moins une dimension d'étiquette fixée sur la base de fréquences d'accès de dimensions d'étiquette, dans lequel la au moins une dimension d'étiquette fixée comprend au moins une dimension d'étiquette ; et
générer (S450) une vue matérialisée de la au moins une dimension d'étiquette fixée sur la base de données bitmap de la au moins une dimension d'étiquette.

6. Procédé de la revendication 5, comprenant en outre :
déterminer une table de données satisfaisant à une condition de filtrage comme table de données candidate en réponse à une demande de consultation d'étiquette portant la condition de filtrage, dans lequel la table de données comprend une table de données bitmap et une table de vue matérialisée ;
déterminer des informations d'attributs de chaque table de données candidate, dans lequel les informations d'attributs comprennent l'un au moins parmi des informations d'espace de machine, un nombre de dimensions et un nombre d'enregistrements d'étiquette ;
sélectionner une table de données cible à partir d'une ou plusieurs tables de données candidates sur la base des informations d'attributs de chaque table de données candidate ; et
déterminer un résultat de consultation d'étiquette sur la base de la table de données cible.

7. Procédé de l'une quelconque des revendications 1-5, comprenant en outre :
déterminer des résultats de consultation d'au moins deux compartiments de données dans une base de données sur la base de données bitmap des au moins deux compartiments de données en réponse à une demande de consultation d'étiquette ; et
rassembler les résultats de consultation des au moins deux compartiments de données pour obtenir un résultat de consultation d'étiquette.

8. Appareil (500) pour traiter des données d'étiquette, et comprenant :
un module de détermination de segment (501), configuré pour déterminer un identifiant de segment d'un utilisateur sur la base d'informations d'identification d'utilisateur, dans lequel le module de détermination de segment (501) comprend :
une unité de détermination de nombre d'utilisateurs, configurée pour déterminer un nombre d'utilisateurs dans un seul compartiment de données sur la base d'un nombre total d'utilisateurs estimé d'une base de données et d'un nombre total de compartiments de la base de données, dans lequel le nombre total d'utilisateurs estimé est une valeur d'expérience préfixée artificiellement ; le nombre total de compartiments se réfère au nombre total de compartiments de données dans la base de données ; et le nombre d'utilisateurs est égal ou supérieur à un quotient de la division du nombre total d'utilisateurs estimé par le nombre total de compartiments ; et
une unité de détermination de segment, configurée pour déterminer l'identifiant de segment sur la base des informations d'identification d'utilisateur et du nombre d'utilisateurs, dans lequel les informations d'identification d'utilisateur sont un entier d'identification, et l'identifiant de segment est un quotient de division des informations d'identification d'utilisateur par le nombre d'utilisateurs dans un seul compartiment de données ;
un module de détermination de compartiment (502), configuré pour déterminer un identifiant de compartiment de l'utilisateur sur la base de l'identifiant de segment en calculant l'identifiant de segment mod le nombre total de compartiments de données dans la base de données ; et
un module de stockage de données (503), configuré pour stocker des données d'étiquette de l'utilisateur dans un compartiment de données associé à l'identifiant de compartiment et agréger les données d'étiquette dans le compartiment de données en données bitmap pour un stockage, dans lequel les données d'étiquette dans le compartiment de données sont agrégées en données bitmap par :
agrégation des données d'étiquette avec la même valeur pour la dimension d'étiquette ;
réalisation d'un calcul de hachage sur les informations d'identification d'utilisateur pour obtenir un entier mappé ; et
construction d'une identification de bitmap d'utilisateur où chaque bit dans l'identification de bitmap d'utilisateur se voit attribuer une valeur de 0 ou de 1 pour indiquer si un utilisateur existe à la position d'entier mappé.

9. Appareil (500) de la revendication 8, dans lequel le module de détermination de compartiment (502) est configuré pour :
déterminer l'identifiant de compartiment sur la base de l'identifiant de segment et d'un nombre total de compartiments d'une base de données.

10. Appareil (500) de l'une quelconque des revendications 8-9, comprenant en outre :
un module de détermination de valeur d'identifiant, configuré pour déterminer une valeur d'identifiant d'utilisateur comme informations d'identification d'utilisateur, dans lequel la valeur d'identifiant d'utilisateur est un entier unique, et la valeur d'identifiant d'utilisateur et des valeurs d'identifiant d'utilisateur d'autres utilisateurs sont consécutives.

11. Appareil (500) de la revendication 8, comprenant en outre un module générateur de vue matérialisée comprenant :
une unité génératrice de vue matérialisée d'ensemble de dimensions, configurée pour générer au moins un ensemble de dimensions d'étiquette sur la base de fréquences d'accès de dimensions d'étiquette, dans lequel l'au moins un ensemble de dimensions d'étiquette comprend au moins une dimension d'étiquette ; et
une unité génératrice de vue matérialisée, configurée pour générer une vue matérialisée du au moins un ensemble de dimensions d'étiquette sur la base de données bitmap de la au moins une dimension d'étiquette.

12. Dispositif électronique, comprenant :
au moins un processeur ; et
une mémoire en liaison de communication avec l'au moins un processeur ;
dans lequel les instructions sont exécutées par l'au moins un processeur pour amener l'au moins un processeur à réaliser le procédé de l'une quelconque des revendications 1-7.

13. Support de stockage non transitoire lisible par ordinateur, ayant des instructions d'ordinateur qui y stockées, dans lequel les instructions d'ordinateur sont configurées pour amener un ordinateur à mettre en oeuvre le procédé de l'une quelconque des revendications 1-7.
